# EUROPEAN PATENT APPLICATION

(11) **EP 1 990 951 A1**
(43) Date of publication of application: **12.11.2008**
(21) Application number: 07009311.7
(22) Date of filing: 09.05.2007
(51) Int. Cl.: H04L 12/28, H04Q 7/38

(54) **3GPP integrated WiMAX CSN interworking function**

(71) Applicant: Nokia Siemens Networks Oy, 02610 Espoo (FI)
(72) Inventor: Brand, Bernd, 81475 München (DE); Liebhart, Rainer, 81476 München (DE); Popovic-Berrsche, Branko, 82256 Fürstenfeldbrück (DE)
(74) Representative: Bruglachner, Thomas E.

(57) **Abstract**

An interworking function device, and in particular an interworking function device being capable of providing an access to a mobile communication network, wherein the interworking function device may be implemented into the mobile communication network to be accessed, so that the interworking function serving as a simplified access from a first mobile communication network to a second mobile communication network, in particular to allow a 3GPP operator to use an existing infrastructure presently used for 2G/3G subscribers also for new WiMAX subscribers.

## Description

### Field of the Invention

The present invention relates to an interworking function device, and in particular to an interworking function device being capable of providing an access to a mobile communication network, wherein the interworking function device may be implemented in the mobile communication network.

### Background of the Invention

In the world wide interoperability for microwave access (WiMAX) Forum, network reference architectures based on the IEEE802.16e broadband wireless access technology are defined. For this purpose, a distinction is made between WiMAX Forum closed networks comprising of access service networks (ASN) and connectivity service networks (CSN), as well as interworking to already existing networks, for example, to 3GPP, 3GPP2, DSL, etc. The accessing device, for example, a mobile station (MS) of a subscriber station (SS), or a user equipment (UE) in general, requests for an access to a WiMAX access network, which WiMAX access network further provides an access to the internet or to a third generation partnership project (3GPP) network. The WiMAX access network and, for example, a 3GPP network are separated and connected via interfaces, so that the access of the accessing device to the WiMAX access network does not correspond to the access to, for example, the 3GPP network. WiMAX networks allow an access to internet protocol (IP) services for users subscribed to a WiMAX connectivity service network (CSN) operator. For gaining an access to a WiMAX network resource, the user's mobile station (MS) has to perform an initial network entry procedure.

During an initial network entry, several steps need to be performed, like network discovery and selection, user and/or device authentication, quality of service (QoS) and service flow establishment, and mobile IP registration and tunnel establishment. For access to WiMAX networks, security for an IEEE802.16-2005 wireless link needs to be established. For a WiMAX 3GPP IP access, a WiMAX direct IP access shall be performed first to establish appropriate key material in the access service network (ASN) authenticator for initiating protection of an reference point R1 wireless link. This is required to allow access to the WiMAX ASN/CSN resources and to initiate a final establishment of a secure reference point Wu tunnel for WiMAX/3GPP IP access. The interfaces and reference points are described in detail in the standard (TS 23.234).

However, presently there is a need to provide an implementation of the new WiMAX access technology into existing 3GPP networks, in which the 3GPP core network infrastructure can be used when connecting WiMAX access networks. Functions of a 3GPP core network which can be reused are, for example, charging, authentication, quality of service and policy control, hand over between 3GPP and non-3GPP access networks, IP multimedia sub-systems (IMS) and the usability of other 3GPP mobile network operator (MNO) services. In particular, there is a need to solve the problem how an operator, which is an operator of a 3GPP network and a WiMAX network at the same time, can connect both of these network architectures in an optimised manner under the re-using of a maximum of functions.

### Summary of Invention

It may be seen as an object of the present invention to provide an interworking function device serving as a simplified access from a first mobile communication network to a second mobile communication network, in particular to allow a 3GPP operator to use an existing infrastructure presently used for 2G/3G subscribers also for new WiMAX subscribers.

The object of the present invention is solved by the subject matter of the independent claims, wherein exemplary embodiments thereof are incorporated in the dependent claims.

According to an exemplary embodiment of the invention, an interworking function device comprises a control unit and a transport unit, wherein the interworking function device is adapted to communicate with a first mobile communication network serving as an access serving network and a second mobile communication network, wherein the control unit is adapted to control an access from the access service network to the second mobile communication network, and the transport unit is adapted to carry out a data transport between the access service network and the second mobile communication network, wherein at least one of the control unit and the transport unit is managed by resources of the second mobile communication network.

Thus, for example, a connectivity service network (CSN) third generation partnership project (3GPP) interworking function is introduced in, for example, a 3GPP core network, wherein the interworking function comprises a control part and a transport part, which both are coupled between a, for example, WiMAX access service network and the 3GPP core network. Thus, a WiMAX access may be implemented into an existing 3GPP network, wherein it is possible to use functions of the 3GPP network. Thus, a plurality of functions may be used for the operation of the 3GPP network and the WiMAX network, which is of particular interest to an operator operating both networks, the 3GPP network and the WiMAX network. In other words, the 3GPP operator can use the existing infrastructure already used by subscribers of a 3GPP network also for WiMAX subscribers. This provides the opportunity to re-use the existing resources.

According to an exemplary embodiment of the invention, the access service network is a world wide interoperability for microwave access (WiMAX) access network.

Thus, the particular requirements of the WiMAX communication may be adapted to the present mobile communication network, like, for example, a 3GPP network. An operator may therefore save resources when operating both an access network and a mobile network, in particular a connectivity service network.

According to an exemplary embodiment of the invention, the interworking function device is adapted to carry out an authentication, authorisation and accounting function and a mobile internet protocol function towards the world wide interoperability for microwave access network.

Thus, the interworking function can be used for establishing a connection between a first mobile communication network and a second mobile communication network, as well as for carrying out a data transport between the first mobile communication network and the second mobile communication network. The interworking function acts as an intermediate between an access network and the mobile network as such, wherein the interworking function may be implemented in the mobile network.

According to an exemplary embodiment of the invention, the interworking function device is adapted to provide a standardised roaming interface to other world wide operability for microwave access networks.

This allows the access by a subscriber not only to a home network, but also to a foreign or visited network. The visited network may have implemented the interworking function so that the interworking function of the foreign or visited network provides the connection to the home network of the subscriber.

According to an exemplary embodiment of the invention, the roaming is based on a home agent of a home network.

According to an exemplary embodiment of the invention, the roaming is based on a foreign agent of an access network.

Thus, based on the inventive interworking function device, it is possible to provide a standardised roaming interface to other world wide operability for microwave access networks. The interworking function may carry out, for example, the establishment of a connection from an access service network to a further WiMAX network as well as the data transport. This connection may be carried out via a reference point of an R5 interface being adapted to carry out the authentication, authorisation and accounting as well as the mobile internet protocol (MIP).

As an alternative, the interworking function may carry out the establishment of the connection to a further WiMAX network, wherein the data transport may be carried out over, for example, an intermediate access router or edge router via a reference point of an R3 interface, being adapted to carry out the authentication, authorisation and accounting from the control to the further WiMAX network as well as the data transport from the access router or edge router based on the mobile internet protocol to the further WiMAX network.

According to an exemplary embodiment of the invention, the second mobile communication network is a third generation partnership project (3GPP) network.

According to a further exemplary embodiment of the invention, the control unit is adapted to communicate with a gateway general packet radio service support node of the second mobile communication network via a control general packet radio service tunnelling protocol.

According to an exemplary embodiment of the invention, the transport unit is adapted to communicate with a gateway general packet radio service support node of the second mobile communication network via a user traffic general packet radio service tunnelling protocol.

This procedure may be carried out via the reference point of a Gn/Gp interface based on the GPRS tunnelling protocol. The interworking function may convert the mobile internet protocol to the general packet radio service tunnelling protocol, so that via a Gn/Gp interface the interworking function may be connected to a common gateway general packet radio service support node. Thus, a WiMAX network may be considered as a 3GPP access network, when viewing from the 3GPP core network, similar to GPRS or UMTS. Owing to the emulated general packet radio service tunnelling protocol based interface, the 3GPP core network elements will not be affected.

The data and control traffic of the WiMAX subscriber will be provided to the already existing general packet radio service (GPRS) support node (GGSN), so that the already present functions may be used, for example, online and offline charging, policy and quality of service control, authentication, service flow charging, IP address allocation, etc. Further, a 3GPP operator, who acts as a WiMAX CSN operator may save a wireless access gateway (WAG) and packet data gateway (PDG), which both are required in the loose coupling approach of a WiMAX network within the prior art, as described in the standard of the WiMAX end-to-end network systems architecture, 2^{nd} stage.

According to an exemplary embodiment of the invention, the second mobile communication network is a world wide interoperability for microwave access (WiMAX) connectivity service network (CSN).

Thus, also a communication between two WiMAX networks, a visited network and a home network, may be provided.

According to an exemplary embodiment of the invention, the interworking function device is adapted to be functionally integrated in the second mobile communication network.

Thus, a particular compatibility may be provided, so that the operator of the 3GPP network having integrated the interworking function device will be independent of a WiMAX access network operator.

It should be noted that the aforementioned features may also be combined with each other, and that when combining the above features, also synergetic effects may occur.

These and other aspects of the present invention will become apparent from and elucidated with reference to the embodiments described hereinafter.

### Brief Description of the Drawings

Exemplary embodiments of the present invention will be described in the following with reference to the following drawings.

Fig. 1 illustrates a WiMAX Forum reference architecture comprising an access service network having an IEEE 802.16e air interface, a visited connectivity service network and a home connectivity service network.

Fig. 2 illustrates a loose coupling WiMAX 3GPP interworking architecture defined in the WiMAX Forum Release 1.

Fig. 3 illustrates the approach of the invention having a connectivity service network 3GPP interworking function in a visited connectivity service network and supporting a WiMAX connectivity service network R5 roaming interface having a termination of the mobile internet protocols at the home agent.

Fig. 4 illustrates a connectivity service network 3GPP interworking function in a visited connectivity service network and supporting a WiMAX connectivity service network R3 roaming interface on the AAA level wherein the mobile internet protocol will be terminated at the home agent in the home connectivity service network.

### Detailed Description of Exemplary Embodiments

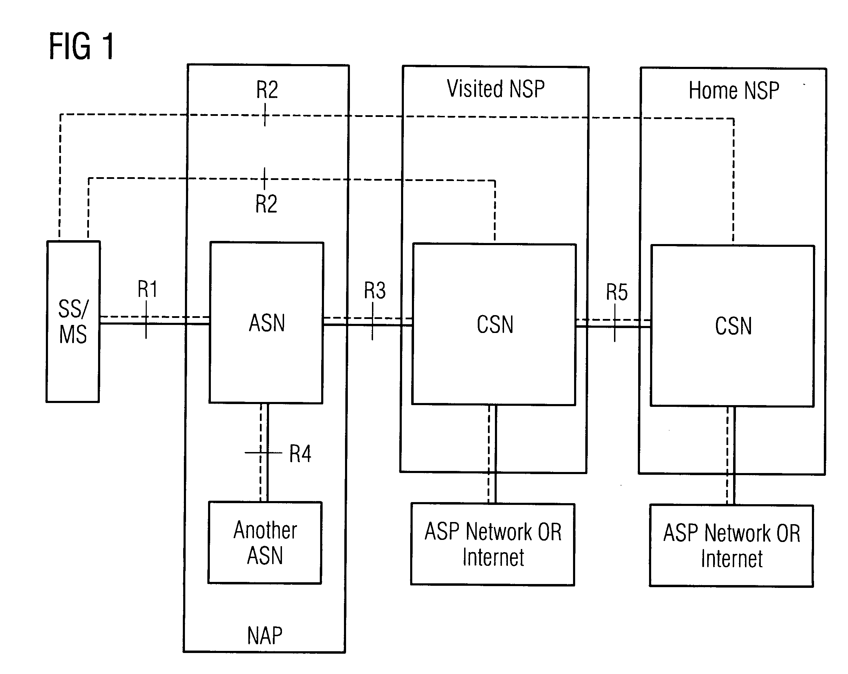

Fig. 1 illustrates a WiMAX Forum reference architecture. The architecture comprises an access service network having an IEEE802.16e air interface. The access service network may be connected with other access service networks (ASN) via an interface R4. The access service networks are operated by a network access provider. The access network is connected via an R3 interface with a connectivity service network, which is operated by a visited network service provider. The connectivity service network (CSN) may be connected via an R5 interface with a home CSN. The visited CSN may be operated by a visited network service provider, wherein the home CSN may be operated by a home network service provider.

Both the visited CSN and the home CSN may be connected via an R2 interface with the accessing unit, wherein the R2 interface may be provided or operated by a network access provider. The CSN (home and/or visited) may also be connected to an access service provider network or the internet.

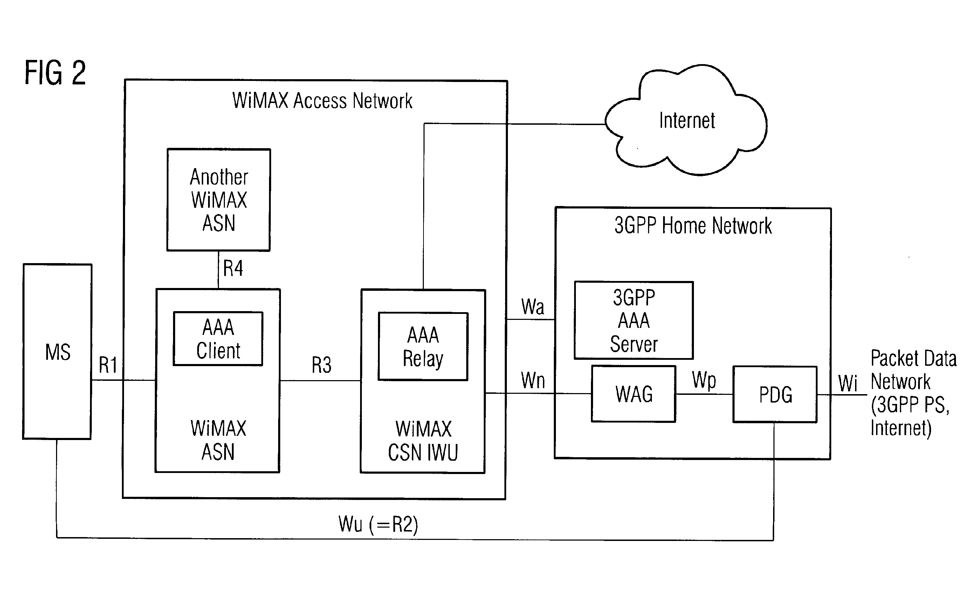

For the particular case of a WiMAX access, the architecture may be as illustrated in Fig. 2. Fig. 2 illustrates a loose coupling WiMAX 3GPP interworking architecture and the appropriate reference points, as defined in the WiMAX Forum Release 1. The interfaces R1, R2, R3, R4, R5 and Wa, Wn, Wp, Wi, Wu are defined in the description of the 3GPP TS 23.234 V6.3.0.

A mobile station may be connected via an R1 interface to a WiMAX access network. The WiMAX access network includes in the illustrated embodiment a WiMAX access service network (ASN), which ASN may be connected also to another WiMAX ASN via an interface R4. The WiMAX ASN includes an authentication, authorization and accounting (AAA) client and a foreign agent (FA). The WiMAX ASN is connected to a WiMAX connectivity service network (CSN) interworking unit (IWU). The WiMAX CSN IWU comprises a home agent (HA) and an AAA proxy server. The WiMAX CSN IWU may provide a connection to the internet as well as a connection to the 3GPP home network. The interworking AAA proxy service as an AAA relay is in the path of an AAA signalling between the AAA client of the ASN and the 3GPP AAA server being responsible for user authentication in the 3GPP home network. To the site of the access service network, the mobility of the mobile IP in the WiMAX CSN IWU interworking unit is terminated to the R3 interface, and projected to the 3GPP Release 6 W-LAN interworking reference architecture with the reference points Wa and Wn. This is carried out by a Wa interface to the 3GPP core network. Thus, mobile internet protocol (MIP) keys may be generated, wherein these keys may be distributed to the involved entities of the WiMAX network (home agent and MIP client). Further, remote authentication dial-in user services may be handled that are WiMAX specific or needed for mobile IP. If a device and user authentication is performed, the device authentication may be performed within the WiMAX network.

A 3GPP AAA server does not support the WiMAX specific authentication mode of combined device/user authentication or device-only authentication, so that these authentication modes are not supported with 3GPP interworking.

If a connection between a user equipment and the 3GPP home network is established via the AAA line client-proxy service/3GPP server, a data transport may be carried out on the Wu interface corresponding to the R2 interface of Fig. 1. The WiMAX CSN IWU communicates with a packet data network via a Wn interface, a wireless access gateway, a Wp interface, a packet data gateway and a Wi interface.

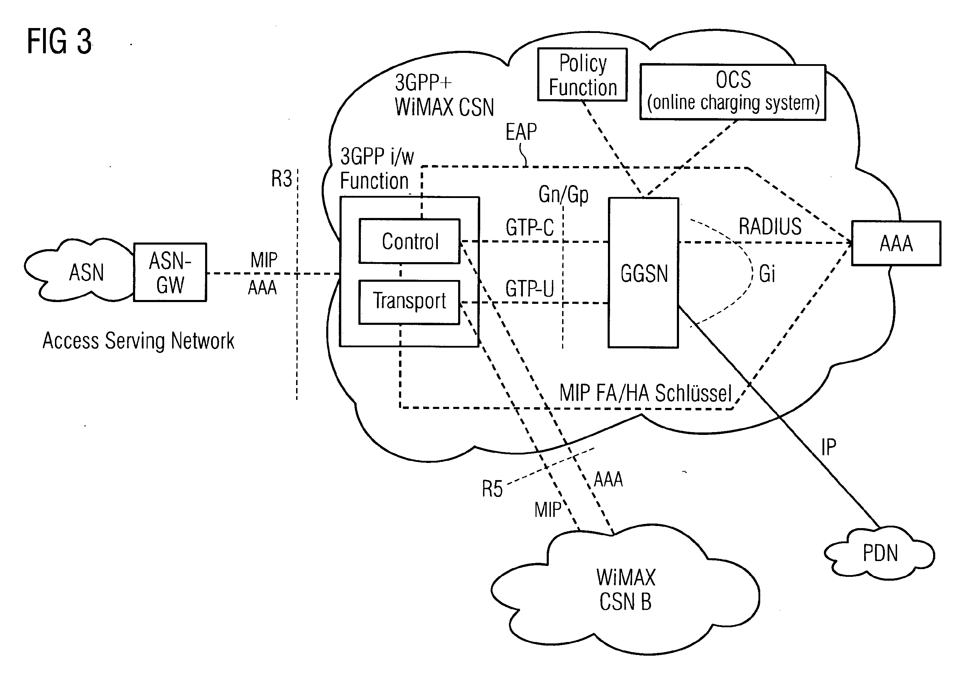

Fig. 3 illustrates a CSN 3GPP interworking function, wherein the CSN 3GPP interworking function operates in a visited CSN and supports a WiMAX CSN R5 roaming interface having a termination of the MIP protocol of the home agent. The access service network requests an AAA via an access service network gateway to the CSN 3GPP interworking function via an R3 interface. The CSN 3GPP interworking function comprises a control unit and a transport unit. The control unit communicates with a GPRS tunnelling protocol with respect to the control function with the GGSN. The transport unit communicates with the GGSN via a GPRS tunnelling protocol with respect to the user traffic. The GGSN may overtake the tasks of the packet data gateway of Fig. 2. The GGSN may be connected to the policy function and the online charging system according to the 3GPP standard architecture. The control unit communicates with the AAA server of the 3GPP network by means of the extensible authentication protocol (EAP) and receives from the AAA server an MIP foreign agent/home agent key to be provided to the access service network. The GGSN provides a connection to a packet data network (PDN) via a Gi interface based on the internet protocol. The mobile network into which the CSN 3GPP interworking function of Fig. 3 may be implemented, may be a 3GPP mobile communication network as well as a WiMAX connectivity service network, however is not limited thereto. The CSN 3GPP interworking function may provide also a connection to a further WiMAX CSN, denoted in Fig. 3 as WiMAX CSN B. The communication to this further WiMAX CSN may be carried out via an R5 interface, on which the AAA as well as the MIP is carried out.

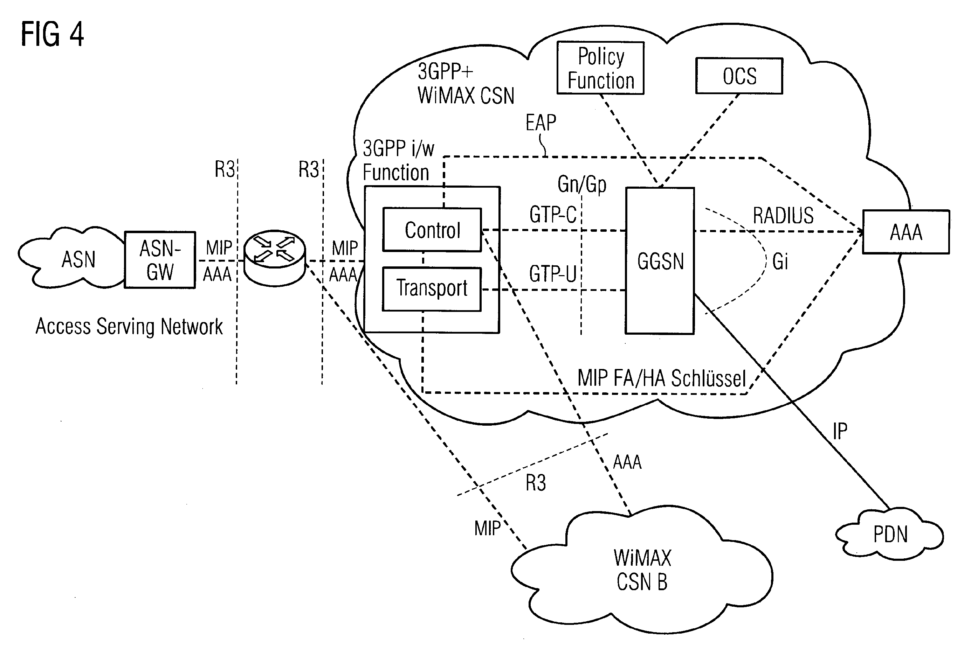

Fig. 4 illustrates a CSN 3GPP interworking function working in a visited CSN and supported by a WiMAX CSN R3 roaming interface on an AAA level, wherein the MIP is terminated on the home agent in the home CSN.

When establishing the connection between the access service network to the WiMAX CSN B via the control of the CSN 3GPP interworking function, the data transport will be carried out by a connection between an intermediate access router or edge router, so that the data transport on the mobile internet protocol will be carried out directly from the access service network via the access router or edge router to the WiMAX CSN B in the illustrated embodiment of Fig. 4. For the communication between the access service network ASN and the 3GPP network and WiMAX CSN, respectively, this bypass data transport does not have any effect. The remaining functions will be as outlined with respect to Fig. 3. This bypass may increase the performance of the data transport and reduce the number of hops.

The 3GPP interworking function of the present invention may replace a serving GPRS support node in the 3GPP standard. In other words, the access does not further require a wireless access gateway (WAG) and a packet data gateway (PDG) as illustrated in Fig. 2. Moreover, compared to the standard of the WiMAX Forum, the access to the, for example, 3GPP network takes place via a different route, so that the access service network may be coupled to the gateway GPRS support note (GGSN) by means of the interworking function device of the present invention.

Further, the interworking function device, for example, the CSN 3GPP interworking function of Figs. 3 and 4 may further carry out on the side of the second mobile communication network the conversion of the WiMAX R3 interface control (RADIUS or DIAMETER) and transport (MIP) onto the Gn/Gp interface being specific for 3GPP. The Gn/Gp interface is based on a GPRS tunnelling protocol (GTP). Thus, the interworking function converts the MIP to the GTP tunnel. Via the Gn/Gp the interworking function may be connected to the common GGSN, so that the WiMAX network appears as a 3GPP access network from the point of view of the 3GPP core network.

Thus, the interworking function, in particular the CSN 3GPP interworking function of Figs. 3 and 4 allow a 3GPP operator to use the already existing infrastructure being used for the 2G/3G subscribers, also for new WiMAX subscribers, as already outlined in detail above.

It should be noted that the term 'comprising' does not exclude other elements and the 'a' or 'an' does not exclude a plurality. Also elements described in association with the different embodiments may be combined.

It should be noted that the reference signs in the claims shall not be construed as limiting the scope of the claims.

## Claims

1. Interworking function device comprising:
a control unit (CU); and
a transport unit (TU);
wherein the interworking function (IWF) device is adapted to communicate with a first mobile communication network (MCN1) serving as an access service network (ASN) and a second mobile communication network (MCN2), wherein the control unit (CU) is adapted to control an access from the access service network (ASN) to the second mobile communication network (MCN2), and the transport unit (TU) is adapted to carry out a data transport between the access service network (ASN) and the second mobile communication network (MCN2), wherein at least one of the control unit (CU) and the transport unit (TU) is managed by resources of the second mobile communication network (MCN2).

2. Interworking function device of claim 1, wherein the access service network (ASN) is a worldwide interoperability for microwave access (WiMAX) access network.

3. Interworking function device of claim 2, wherein the interworking function (IWF) device is adapted to carry out an authentication, authorisation and accounting (AAA) function and a mobile internet protocol (MIP) function towards the worldwide interoperability for microwave access (WiMAX) access network.

4. Interworking function device of any of the preceding claims, wherein the interworking function (IWF) device is adapted to provide a standardized roaming interface to other worldwide interoperability for microwave access (WiMAX) networks.

5. Interworking function device of claim 4, wherein the roaming is based on a home agent (HA) of a home network.

6. Interworking function device of claim 4, wherein the roaming is based on a foreign agent (FA) of an access network.

7. Interworking function device of any of claims 1 to 6, wherein the second mobile communicating network (MCN2) is a third generation partnership project (3GPP) network.

8. Interworking function device of any of the preceding claims, wherein the control unit (CU) is adapted to communicate with a gateway general packet radio service (GPRS) support node (GGSN) of the second mobile communication network (MCN2) via a control general packet radio service (GPRS) tunnelling protocol (GTP-C).

9. Interworking function device of any of the preceding claims, wherein the transport unit (TU) is adapted to communicate with a gateway general packet radio service (GPRS) support node (GGSN) of the second mobile communication network (MCN2) via a user traffic general packet radio service (GPRS) tunnelling protocol (GTP-U).

10. Interworking function device of any of claims 1 to 6, wherein the second mobile communicating network (MCN2) is a worldwide interoperability for microwave access (WiMAX) connectivity service network (CSN).

11. Interworking function device of any of the preceding claims, being adapted to be functionally integrated in the second mobile communication network (MCN2).
